## Europäisches Patentamt
## European Patent Office
## Office européen des brevets

(19)

(11) Veröffentlichungsnummer: **0 227 660**
**B1**

(12) # EUROPÄISCHE PATENTSCHRIFT

(45) Veröffentlichungstag der Patentschrift:
01.06.88

(51) Int. Cl.⁴: **B 60 K 23/04**

(21) Anmeldenummer: **85903999.2**

(22) Anmeldetag: **16.08.85**

(86) Internationale Anmeldenummer:
**PCT/EP 85/00418**

(87) Internationale Veröffentlichungsnummer:
**WO 86/01467 (13.03.86** Gazette 86/6)

(54) **BETÄTIGUNG EINER DIFFERENTIALSPERRE.**

(30) Priorität: **29.08.84 PC /EP84/002 59**

(43) Veröffentlichungstag der Anmeldung:
**08.07.87 Patentblatt 87/28**

(45) Bekanntmachung des Hinweises auf die Patenterteilung:
**01.06.88 Patentblatt 88/22**

(84) Benannte Vertragsstaaten:
**AT DE FR GB IT SE**

(56) Entgegenhaltungen:
**EP - A - 0 128 478**
**WO - A - 81/02049**
**DE - A - 459 638**
**FR - A - 2 434 969**
**FR - E - 96 041**
**US - A - 2 874 790**

**PATENT ABSTRACTS OF JAPAN, vol. 7, no. 133, page (M-221)(1278), 10 June 1983**

(73) Patentinhaber: **ZAHNRADFABRIK FRIEDRICHSHAFEN AKTIENGESELLSCHAFT, Löwentaler Strasse 100 Postfach 2520, D-7990 Friedrichshafen 1 (DE)**

(72) Erfinder: **EHRLINGER, Friedrich, Karl-Weiss-Strasse 15, D-7990 Friedrichshafen 5 (DE)**
Erfinder: **DZIUBA, Peter, Im Öschle 23, D-7770 Überlingen (DE)**
Erfinder: **SOLLBACH, Gerhard, Akeleiweg 4, D-7990 Friedrichshafen (DE)**
Erfinder: **KELLER, Walter, Zur öle 31, D-7777 Salem (DE)**

(74) Vertreter: **Raue, Reimund, Zahnradfabrik Friedrichshafen AG Löwentaler Strasse 100 Postfach 2520, D-7990 Friedrichshafen 1 (DE)**

## Beschreibung

Die Erfindung betrifft Differentialsperren-Betätigungen nach dem Oberbegriff des Anspruches 1, wie sie z. B. aus der FR-E-96041 bekannt sind, wonach eine unstarre Übermittlung der Schaltbefehle, z. B. in vorwählbarer Abhängigkeit von Fahrzeug-Lenkwinkeln und/oder Bremsungen, vorgesehen ist. Ein Signalgeber in Form einer beim Schneckenrad der Lenkstockspindel befestigten Schaltsegmentscheibe steuert dabei unmittelbar elektrisch die Kupplung zur Verriegelung eines Differentialgetriebes je nach Lenkwinkeleinschlag.

Wegen des dazu erforderlichen Eingriffs in das eigentliche Lenkgetriebe und der damit gegebenen Fehlermöglichkeiten und Einbauschwierigkeiten eignet sich diese Einbaulösung noch nicht für Ackerschlepper, Baufahrzeuge usw. Eine leichte, evtl. auch fakultative Einbaubarkeit zur beliebigen Nachrüstung bzw. Auswechslung des Signalgebers ohne Eingriffsnotwendigkeit in das eigentliche Getriebeinnere wird auch nicht ersichtlich aus der WO 81/02049. Sie zeigt ein Differentialsperren-Kontrollsystem, bei dem ein von Lenkwinkel-Veränderungen beeinflusster Signalgeber über ein elektrohydraulisches Stellsystem Schaltsignale für eine hydraulisch betätigbare Sperrkupplung auslöst. Da diese Bauart insbesondere für Fahrzeuge mit zuschaltbaren Antriebsachsen benötigt wird, welche oft in unwegsamem Gelände eingesetzt sind, bedarf es einer besonders ausgewählten Anordnung des Signalgebers im Lenkungsbereich, um seine Funktion zuverlässig sicherzustellen.

Neben der Gefahr plötzlicher Funktionsunterbrechungen ist die Verhütung von zufälligen Sperreaktivierungen bzw. Entsperrungen in Fahrzuständen, in denen sie unerwünscht sind (z. B. Entsperren beim Wenden eines Schleppers auf stark geneigtem, unregelmässigem Gelände), wie sie falsch reagierende Signalgeber verursachen können, von Wichtigkeit. So könnten bei beschädigtem oder verschmutztem Signalgeber dessen Reaktionen, z. B. auf Lastverteilungen und Änderungen der Untergrundbeschaffenheit, nie exakt vorherbestimmbare Einflüsse auf den Schaltungsauslösvorgang stattfinden, durch welche der Kraftfluss mit dem Untergrund in kritischen Momenten gestört bzw. vermindert werden kann.

Besonders bei geländegängigen Fahrzeugen sind erhebliche Montage-, Beschädigungsschutz- und Inspektionsprobleme zu beachten.

— Weiterhin ist die Verhütung von zufälligen Sperreaktivierungen bzw. Entsperrungen in Fahrzuständen, in denen sie unerwünscht sind (z. B. Entsperren beim Wenden eines Schleppers auf stark geneigtem, unregelmässigen Gelände), vom Drehzahlabgleich ausgehend nicht absolut zuverlässig erreichbar, weil z. B. durch Lastverteilungen und Untergrundbeschaffenheit viele, nie exakt vorherbestimmbare Einflüsse auf den Schaltungsauslösvorgang stattfinden können, durch welche der Kraftfluss mit dem Untergrund in kritischen Momenten gestört bzw. vermindert werden kann.

— Schliesslich vergrössert bzw. multipliziert auch der Einbau von zwei aufeinander abzustimmenden elektronischen Messfühlern an den beiden Antriebswellen besonders bei geländegängigen Fahrzeugen auch Montage-, Beschädigungsschutz- und Inspektionsprobleme.

Die Aufgabe der Erfindung ist es, den aufgezeigten Stand der Technik dahingehend zu verbessern, dass eine weniger aufwendige und störungsempfindliche Einrichtung mit einem leicht einbaubaren und exakt vorgebbaren Schaltbereich geschaffen wird, bei der der Fahrer die Erreichung des Schaltpunktes auch stets deutlich voraussehen und steuern kann.

Die Lösung dieser Aufgabe besteht gemäss dem kennzeichnenden Merkmal des Anspruches 1 darin, dass nicht mehr aus zwei Gebern und einem elektronischen Auswerter entweder Drehzahl- oder Drehmoment-Unterschiedsbereiche zur Auslösung der Differentialsperre benötigt werden, sondern jetzt nur noch ein einziges, möglichst sogar unmittelbar galvanisch abgreifbares elektrisches Ja-NEIN-Schaltsignal, das direkt von einer mechanischen Veränderung der Lenkgeometrie ausgeht, wobei das Signal auch ohne oder mit nur minimalem Elektronikaufwand direkt zur Schaltkupplung übertragbar werden kann, und das Öffnen bzw. Wiedereinlegen der Sperre zuverlässig exakt in jeweils gleichen Fahrzuständen auslöst, welche vom Fahrer nach kurzer Gewöhnung gefühlsmässig schon genau vorhersehbar sind. Bei mechanischen Lenkgetrieben ist es sogar möglich, die Einschaltpunkte bestimmten Lenkradstellungen genau zuzuordnen.

Neben Ersparnissen und Benutzungsvorteilen durch einfachere und nicht mehr auch von der Bodenbeschaffenheit oder dem Gefälle abhängige Schaltungstechnik, sondern eine nun exakt, ausschliesslich lenkwinkelabhängige und deutlich voraussehbare Umschaltfunktion wird noch erreicht, dass keine unnötigen EIN-AUS-Schaltungsbeanspruchungen der Sperrkupplung bei nur kurzen, z. B. geländebedingten Drehzahlunterschieden, mehr auftreten können.

Dabei bleibt eine Selbsttätigkeit der Sperre bei höchster Funktionszuverlässigkeit hier insofern dennoch gewahrt, als der Fahrer beim Lenken in eine Kurve den Sperrenschalter bei entsprechend grossem Lenkeinschlag unwillkürlich bzw. gezwungenermassen und ohne besondere Handgriffe einfach mitbetätigt. Er wird dabei nach kurzer Eingewöhnungszeit das vorübergehende Freiwerden der Sperre in engeren Kurven und beim Wenden gar nicht mehr als etwas besonderes beachten, weil es bei Geradeausfahrt bzw. bei weiteren Bögen nicht mehr zu an sich ungewollten Umschaltungen kommen kann.

Die Vorteile der Erfindung kommen natürlich auch unabhängig von der Art der Sperrkupplungskonstruktion bzw. des Schalters oder der Art des von ihm abgegebenen Signales zur Auswirkung. Die Anwendung in Kombination mit einer Formschlusskupplung im selben Schaltkreis wie der Signalgeber ist ohne weiteres möglich, so dass im Normaleinsatz sowohl ein völlig schlupffreier Durchtrieb auf beiden Rädern als auch eine zuverlässige Signalübertragung ausschliesslich lenkwinkelabhängig möglich wird.

Aus dem Bereich der Antiblockiersysteme sind zwar Bremsbetätigungen bekannt geworden, die ebenfalls vom Lenkwinkel ausgehend gesteuert werden sollen. Jedoch soll dort der Durchgang einer vollen Antriebsleistung behindert werden, während er bei Allrad-Antrieben mit Sperrdifferentialen gerade ermöglicht werden soll. Somit sind gänzlich andere Verwendungszwecke und Einsatzziele gegeben.

Vorteilhafte Ausgestaltungen der Erfindung sind in den Unteransprüchen beschrieben.

Nach den Ansprüchen 2 bis 5 sind je nach Achskonstruktionen günstige bzw. beschädigungsgeschützte Einbauorte für die Signalgeberschalter vorgesehen.

Gemäss Anspruch 2 würde beispielsweise günstig ein Winkelpotentiometer eingebaut werden können.

Gemäss Anspruch 3 kann ein Endschalter günstig angebaut werden.

Gemäss Anspruch 4 ist ein in das Innere einer Hohlachse verlegter Einbau eines Endschalters oder Potentiometers möglich.

Gemäss Anspruch 5 kann auch eine berührungslose, z. B. induktive Auslösung vorgesehen werden, bei der die Schräglage des Lenkgehäuses gegenüber dem Achsgehäuse als Kriterium für ein lenkwinkelproportionales Signal verwendet wird.

Nach Anspruch 6 wird eine elektrische Formschlusskupplung bevorzugt, deren Schaltstrom unmittelbar über den Signalgeber besonders ein- und ausschaltbar ist.

Selbstverständlich lassen sich auch andere Hilfskraftbetätigungen gleichermassen wie elektrische verwenden, z. B. der hydraulischen, pneumatischen oder elektromotorischen Stellglieder. Und anstelle von Formschlusskupplungen sind auch Reibkupplungen oder Viskosekupplungen etc. auf gleiche Weise betätigbar.

Nach Anspruch 7 ist eine Anpassungsmöglichkeit für die Ansprechempfindlichkeit des Signalgebers bzw. die Lage des Grenzwertes vorgesehen, welche es erlaubt, von einem durch das Lieferwerk vorjustierten Richtwert auf Wunsch auch einmal abzuweichen, z. B. wenn wegen besonders schlüpfrigen Bodens zur Verbesserung der Radhaftung ohne Unterbrechung der Sperrwirkung gearbeitet werden soll. Dabei kann sowohl ein Analogsignal als auch ein Digitalsignal, das den Lenkwinkel abtastet, zur Anwendung gelangen. Eine optische Anzeige über die Lage des jeweiligen Grenzwertes im Lenkwinkelbereich ist ebenfalls auf Wunsch einfach und genau realisierbar.

Nach Anspruch 8 ist eine Zusammenfassung der erfindungsgemäss verbesserten Differentialsperrenbetätigung mit dem Wahlschalter für die jeweilige Antriebsachse in dem Sinne vorgesehen, dass sie nur bei tatsächlich in Betrieb befindlicher Antriebsachse zuschaltbar ist, so dass die mit dem Differentialsperrenbetrieb verbundenen Verschleiss- und Reibungsvorgänge auf diejenigen Betriebsphasen allein beschränkt bleiben können, für die sich der Fahrer zusammen mit dem Allradbetrieb einen Nutzen verspricht.

Nach Anspruch 9 wird eine Signalgeber-Anordnung erreicht, mit welcher nicht nur eine fortlaufende, exakte und strömungsfreie Lenkwinkelmessung während des Betriebs, sondern auch eine einfache Justierung möglich wird. Dabei ist das Potentiometer und sein Anschluss stoss- und verschmutzungssicher so in ein den Lenkwinkel direkt mitvollziehendes Lager integriert, dass unbefugte Verstellung sicher verhinderbar ist.

In den Zeichnungen 1 bis 4 sind Ausführungsdetails für einige Anwendungsbeispiele angegeben.

Fig. 1 zeigt die Draufsicht einer angetriebenen Lenkachse, bei welcher am Lenkzylinder ein Schaltkontakt zum Schalten des Sperrdifferentials vorgesehen ist.

Fig. 2 zeigt ein Detail des Achsgehäuses mit drei verschiedenen Einbaumöglichkeiten von Schaltern zum Lenkwinkelabgriff.

Fig. 3 zeigt ein Schaltschema, aus welchem die Anordnung bei verschiedenen Schaltereinbauten ersichtlich ist.

Fig. 4 zeigt eine bevorzugte Signalgeber-Anordnung innerhalb eines Lenkzapfens.

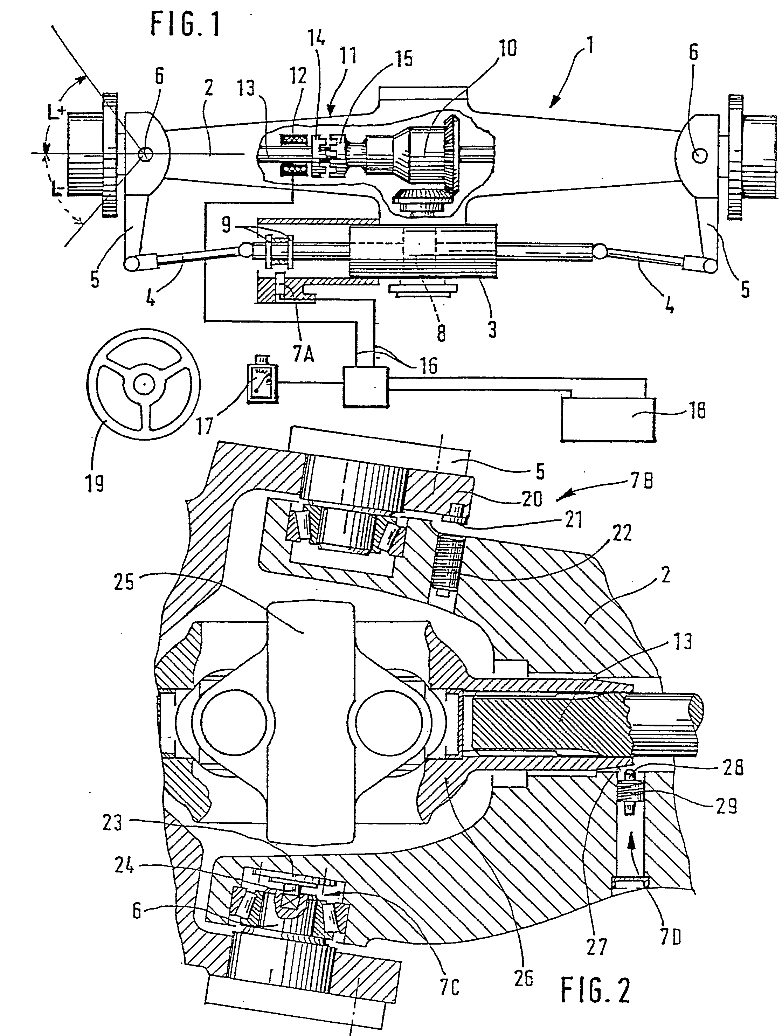

In Fig. 1 ist die Lenkachse 1 mit einem unmittelbar an ihrem Gehäuse 2 angebauten Lenkzylinder 3 ausgerüstet, von dem aus über Spurstangen 4 die Lenkhebel 5 in die eine oder andere Richtung um den Lenkzapfen 6 schwenkbar sind. Daher wird ein in den Lenkzylinder 3 eingelassener Schalter 7 von einer von zwei beiderseits davon auf dem Lenkkolben 8 angeordneten Schaltfahnen 9 (bzw. Magneten) betätigt. Der Schaltimpuls erfolgt hier nur bei einem bedarfsweise eingestellten, teilweise eingeschlagenen Lenkwinkel L abweichend von der Geradeausfahrt, also unabhängig von Drehzahlen bzw. Drehzahldifferenzen, welche in der Regel ja erst in der Folge eines Lenkwinkeleinschlages entstehen, sofern nicht das im Achsgehäuse 2 eingebaute Sperrdifferential 10 über die ihm zugeordnete Kupplung 11 gerade eingelegt ist. Diese Kupplung 11, welche in dieser Anwendung vorzugsweise als Formschlusskupplung ausgebildet ist, hat eine elektromagnetische Betätigung 12 auf einer für die Zwangsverschiebung bei Lenkeinschlag begrenzt achsparallel verschieblichen Steckwelle 13 und kann eine der Kupplungshälften 14 während des Stromflusses mit der anderen Kupplungshälfte 15 in Form- oder Kraftschluss bringen und damit Drehzahlgleichheit an beiden Rädern bewirken. Gemäss der Erfindung bleibt dieser Form- oder Kraftschluss so lange aufrechterhalten, bis der Schaltstrom in der Verbindungsleitung 16 wieder unterbrochen wird, was entweder durch den Fahrer über einen Handschalter 17 und/oder durch den eingebauten Lenkwinkel-Schalter 7 erfolgen kann. Auch die nicht gezeigte Vorderachs-Zuschaltbarkeit über eine weiter eingelegte Kupplung auf der Kardanwelle kann einen weiteren Kontakt (z. B. Schalter 30) aufweisen, durch den die Stromzufuhr zur Elektromagnetbetätigung 12 unterbrechbar ist. Somit kann eine Einschaltung der Elektromagnetbetätigung 12 nur bei tatsächlich eingelegtem Antrieb der mit dem Sperrdifferential ausgerüsteten Achse erfolgen. Die Schalter 7/17 usw. sowie die Elektromagnetbetätigung 12 stehen über die Verbindungsleitung 16 mit der Bordstromversorgung 18 in Verbindung. Durch eine Stellungsanzeige auf dem Handschalter 17 und dessen Anordnung im Bereich des Lenkrades 19 bietet sich die Möglichkeit für den Fahrer, die Ein- und Ausschaltung des Sperrdifferentials 10 auch optisch erkennen zu können.

In Fig. 2 sind mehrere Einbaumöglichkeiten für die Schalter 7B, 7C, 7D gemäss der Erfindung aufgezeigt.

– Der Schalter 7B könnte z. B. ein induktiver Signalgeber sein, der aus einem am Rand der Radnabengabel 20 eingelassenen Magnetplättchen 21 besteht, welches bei der durch Schwenkung des Lenkhebels 5 erfolgenden Annäherung an einen im Achsgehäuse zwei darunter festgehaltenen Spulenkörper 22 besteht und anspricht bzw. Strom durchlässt oder unterbricht zur nicht gezeigten Elektromagnetbetätigung 12. Die Kabelanschlüsse zu den Schaltern sind der Einfachheit halber hier in der Zeichnung nicht dargestellt.

– Eine ähnliche Einbaumöglichkeit wäre auch erreichbar, wenn das Wellengelenk 25 z. B. einen Ring aus ferromagnetischem Material trüge und im Gehäuse 2 ein Spulenkörper 22 eingelassen wäre.

– Der Schalter 7C wird hier z. B. als ein Potentiometer 23 dargestellt, dessen Körper in der Lagerbohrung für den Lenkzapfen 6 am Gehäuse 2 festgelegt ist und mit einer kleinen Welle 24 in den Lenkzapfen 2 hineingreift, so dass bei dessen Drehung je nach Winkel ein mehr oder minder grosser Strom durchfliessen kann, wodurch der Schaltpunkt der Elektromagnetbetätigung 12 festlegbar ist.

– Der Schalter 7D nützt die vom Lenkwinkel abhängige Linearverschiebung zwischen der Steckwelle 13 und der Gabelhülse 26 des Wellengelenkes 25 und besteht im wesentlichen aus einer Schaltkante 27 am differentialseitigen Ende der Gabelhülse 26, welche bei entsprechend grossem Lenkwinkeleinschlag einen Schaltstift 28 eines in eine bis zur Innenwand des Achsgehäuses 2 durchgehende Bohrung eingelassenen Druckschalters 29 betätigt.

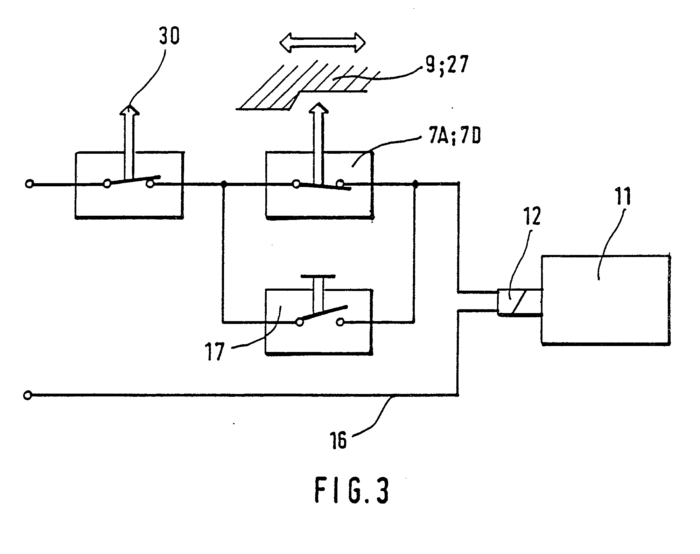

In Fig. 3 ist die elektrische Magnetbetätigung 12 der Kupplung 11 des Sperrdifferentials 10 dargestellt. Die Verbindungsleitung 16 ist z. B. gemäss Signalgeber 7A bis 7D über eine Schaltfahne 9 bzw. eine Anschlagkante 27 oder über Magnetspulen 22 bzw. Potentiometer 23 allein lenkwinkelabhängig aktivierbar oder aber über einen Hand- bzw. Fussschalter 17 nach Gutdünken durch den Fahrer und auch (in Koppelung mit einem nicht gezeigten Betätigungsmechanismus) abhängig von der Stellung eines Allrad-Zuschaltungshebels 30 aktivierbar. Die jeweiligen Schaltungsversionen lassen sich dabei mit üblichen elektromechanischen Mitteln auf Bedarf auch noch mit Verstärkungs- bzw. Verzögerungsgliedern bestücken, z. B. um Reifengrössen- oder Geländeanpassungen ohne komplizierten Fühleraustausch und Programmumstellungen vornehmen zu können. Die Verknüpfung des Lenkwinkelschalters 7 mit den Handschaltern 17 bzw. Allradantriebsschaltern 30 stellt sicher, dass das Sperrdifferential nur bei den entsprechend kritischen Fahrzuständen über den Lenkwinkel-Einschlag automatisch einschaltbar ist. – Die Einschalthäufigkeit für das Sperrdifferential wird dadurch auf wesentliche Bedarfsfälle beschränkt und eine einfachere und robustere Schalttechnik erreicht.

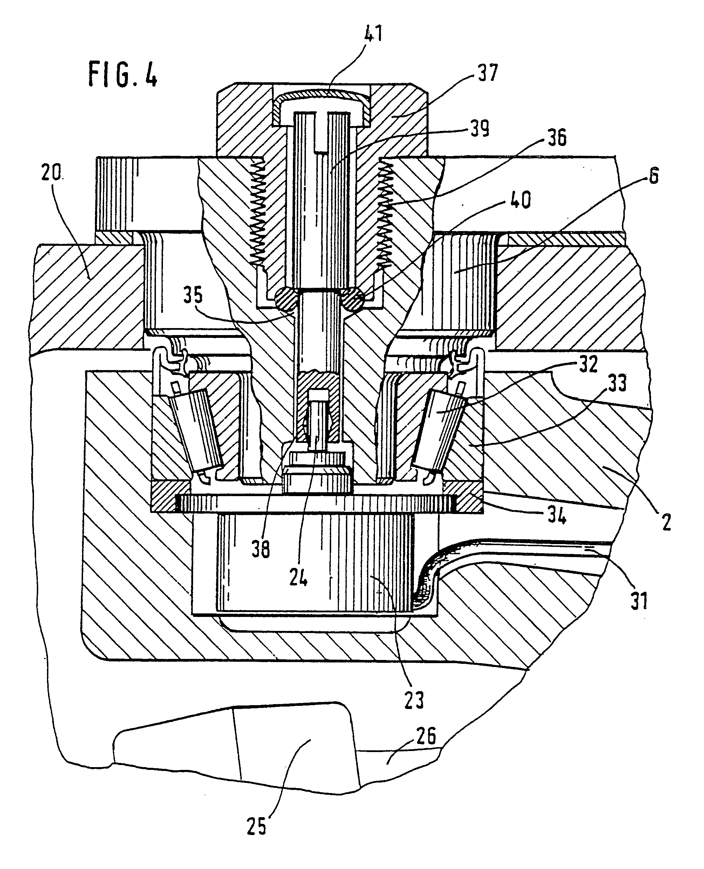

In Fig. 4 ist der Signalgeber 7C ein Drehpotentiometer 23, dessen Verbindungskabel 31 zur Bordstromversorgung 18 und zu den Allradzuschaltern 17 bzw. 30 beschädigungssicher durch das Achsgehäuse 2 herangeführt ist. Das Drehpotentiometer 23 ist dabei in das Drehzapfenlager 32 integriert, indem sein Gehäuse durch einen unter dem Lageraussenring 33 im Achsgehäuse 2 drehfesten Halteflansch 34 befestigt ist. Im Lenkzapfen 6 ist eine Stufenbohrung 35 vorgesehen, deren Grösstdurchmesser mittels Innengewinde 36 eine Hohlschraube 37 aufnimmt. In diese ist ein mittels Mitnahmeschlitz und Spreizfeder 38 mit der Potentiometerwelle 24 Formschluss erhaltender Justierbolzen 39 drehbeweglich eingesetzt, welcher durch die Hohlschraube 37 mittels eines ihr achsseitig unterlegten Dichtringes 40 nach Einstellung über einen Schraubendreher-Schlitz an seiner oberen Stirnseite unter Beseitigung seines Radialspiels festklemmbar ist und völlig in der durch eine Verschlusskappe 41 abgedeckten Hohlschraube 37 gesichert ist. Bei angekonterter Hohlschraube 37 wird damit der Justierbolzen 39 durch die Klemmkraft aus dem Dichtring 40 elastisch so festgehalten, dass zwar die Potentiometerwelle 24 in jeweiliger Drehrichtung zuverlässig mitverschwenkt wird, aber dennoch kleinere Winkelfehler bzw. im üblichen Rahmen liegende Achsversatzwerte keine Beschädigung des Drehpotentiometers 23 hervorrufen können.

**Patentansprüche**

1. Betätigung einer Differentialsperre, welche durch ausserhalb der Differentialsperre ausgelöste Signale gesteuert ist, mit einem einzelnen Signalgeber (7), durch den ein unmittelbar abgegriffener Grenzwert des Lenkeinschlagwinkels (L) beim Einschlagen eines sich gegenüber einem Achsgehäuse (2) verschiebenden Lenkungselementes (5, 20) geschaltet wird, dadurch gekennzeichnet,

– dass der Signalgeber (7) zur Stoss- und Verschmutzungssicherung und zum Beschädigungsschutz in einem mit dem unverschieblichen Achsgehäuse (2) fest verbundenen Bauteil (2, 3) eingelassen eingebaut ist,

– und dass als Sperrdifferential (10) eine elektrisch betätigbare Kupplung (11) im elektrischen Schaltkreis des Signalgebers (7) vorgesehen ist, wobei Verbindungskabel (31) zwischen Signalgeber (7) und Kupplung (11) durch das Achsgehäuse (2) herangeführt sind.

2. Betätigung nach Anspruch 1, dadurch gekennzeichnet, dass der Signalgeber (7A) im Bereich einer linear beweglichen Lenkungsbetätigung (3, 4) (Kolben (8) des unmittelbar am Achsgehäuse (2) eingebauten Lenkzylinders (3)) angebracht ist.

3. Betätigung nach Anspruch 1, dadurch gekennzeichnet, dass der Signalgeber (7B) im Bereich einer drehbeweglichen Lenkzapfenlagerung (5, 6) bei der Gabel (20) bzw. dem Gehäuse (2) des Wellengelenks (25) eingebaut ist.

4. Betätigung nach Anspruch 1, dadurch gekennzeichnet, dass der Signalgeber (7C) im Bereich eines schwenkbeweglichen Wellengelenkteiles (25) im Gabelgehäuse (26) eingebaut ist.

5. Betätigung nach Anspruch 1, dadurch gekennzeichnet, dass der Signalgeber (7C) im Bereich eines längsverschieblichen Gelenkwellenteilstückes im differentialseitigen Gabelgehäuse (26) eingebaut ist.

6. Betätigung nach Anspruch 5, dadurch gekennzeichnet,
— dass der Signalgeber (7C) ein unterhalb eines Lenkzapfens (6) angeordnetes Drehpotentiometer (23) mit zum Zapfen (6) weisender Potentiometerwelle (24) ist, welches unterhalb eines Lageraussenringes (33) am Zapfenlager (32) mittels eines Halteflansches (34) mit dem Achsgehäuse (2) drehfest verbunden ist,
— und dass im fest mit der Radnabengabel (20) verbundenen, aber gegenüber dem Achsgehäuse (2) schwenkbeweglichen Lenkzapfen (6) eine mit Gewinde (36) im Grösstdurchmesser versehene Stufenbohrung (35) eingebracht ist, in welcher eine Hohlschraube (37) einen in die Potentiometerwelle (24) mittels einer Spreizfeder (38) formschlüssig eingreifenden, an beiden Stirnseiten geschlitzten Justierbolzen (38) umfasst und dessen Radialspiel mit Hilfe eines ihr achsseitig vorgeordneten Dichtringes (40) verschlossen hält.

7. Betätigung nach Anspruch 1, dadurch gekennzeichnet, dass die Kupplung (11) als Formschlusskupplung mit Elektromagnet (12) ausgebildet ist.

8. Betätigung nach Anspruch 1, dadurch gekennzeichnet, dass dem Signalgeber (7) ein Handschalter (17) in der Verbindungsleitung (16) zugeordnet ist.

## Claims

1. A control means for a differential stop member, which is controlled by signals triggered outside the differential stop member, with an individual signal generator (7), by means of which a directly read limit value of the steering lock angle (L) is switched as a steering element (5, 20) moving relative to an axle casing (2) turns, characterised in that
— the signal generator (7) is countersunk in a component (2, 3) which is rigidly connected to the unmoveable axle casing (2) for protection against impacts and contamination and for protection against damage,

— and an electrically operable clutch (11) is provided as locking differential (10) in the electric circuit of the signal generator (7), connecting cables (31) being fed between signal generator (7) and clutch (11) through the axle casing (2).

2. A control means according to claim 1, characterised in that the signal generator (7A) is arranged in the region of a linearly moveable steering control means (3, 4) (piston (8) of the steering cylinder (3) installed directly on the axle casing (2)).

3. A control means according to claim 1, characterised in that the signal generator (7B) is installed in the region of a rotary steering pivot assembly (5, 6) with the fork (20) or the casing (2) of the universal joint (25).

4. A control means according to claim 1, characterised in that the signal generator (7C) is installed in the region of a pivotal universal joint member (25) in the fork casing (26).

5. A control means according to claim 1, characterised in that the signal generator (7C) is installed in the region of a longitudinally moveable propeller shaft portion in the fork casing (26) on the differential side.

6. A control means according to claim 5, characterised in that
— the signal generator (7C) is a rotary potentiometer (23) arranged below a steering pivot (6) with a potentiometer shaft (24) which points toward the pivot (6) and is rigidly connected to the axle casing (2) beneath the outer ring of a bearing (33) on the pivot bearing (32) by means of a holding flange (34),
— and, in the steering pivot (6) which is rigidly connected to the wheel hub fork (20) but is pivotal relative to the axle casing (2), there is introduced a stepped passage (35) which is provided with a screw thread (36) over its largest diameter and in which a hollow screw (37) surrounds an adjusting bolt (38) which engages positively in the potentiometer shaft (24) by means of a spreading spring (38) and is slotted at both end faces, the hollow screw (37) keeping the radial clearance of the adjusting bolt closed by means of a sealing ring (40) arranged in front of it on the axle side.

7. A control means according to claim 1, characterised in that the clutch (11) is designed as a positive clutch with electromagnet (12).

8. A control means according to claim 1, characterised in that a manual switch (17) in the connecting line (16) is connected to the signal generator (7).

## Revendications

1. Commande d'un verrouillage de différentiel commandé par des signaux délivrés à l'extérieur du verrouillage de différentiel, à partir d'un seul capteur (7) par lequel est signalée une valeur limite de l'angle de braquage (L) lors du braquage d'un élément de direction (5, 20) se déplaçant par rapport à un carter d'essieu (2), caractérisée:

— en ce que le capteur (7) est encastré dans un élément de construction (2, 3) fixé rigidement au carter stationnaire de l'essieu (2), de façon que le capteur soit protégé des chocs, des salissures et des dégâts,

— et en ce que le verrouillage du différentiel (10) est réalisé par un embrayage (11) actionné électriquement dans le circuit électrique commandé par le capteur (7), à l'aide de câbles (31) de liaison entre le capteur (7) et l'embrayage (11) qui passent à travers le carter d'essieu (2).

2. Commande selon la revendication 1, caractérisée en ce que le capteur (7A) est installé dans la zone d'un organe de commande de direction (3, 4) qui est mobile linéairement (piston (8) du vérin de direction (3) monté directement contre le carter d'essieu (2)).

3. Commande selon la revendication 1, caractérisée en ce que le capteur (7B) est installé dans la zone d'un palier de rotation d'un pivot de direction (5, 6) sur la chape (20) ou sur le carter (2) de l'articulation d'arbre (25).

4. Commande selon la revendication 1, caractérisée en ce que le capteur (7C) est installé dans la zone d'une pièce pivotante (25) d'une articulation d'arbre, dans la chape de l'articulation (26).

5. Commande selon la revendication 1, caractérisée en ce que le capteur (7C) est installé dans la zone d'une pièce mobile longitudinalement d'une articulation d'arbre, dans la chape d'articulation (26) située du côté du différentiel.

6. Commande selon la revendication 5, caractérisée:

— en ce que le capteur (7C) est constitué par un potentiomètre à rotation (23) disposé en dessous d'un pivot de direction (6) et comportant un axe de potentiomètre (24) du côté de ce pivot (6), ce potentiomètre étant rendu solidaire en rotation du carter d'essieu (2) au moyen d'un flasque (34) de fixation au palier (32) du pivot sous une bague extérieure (33) de ce palier,

— et en ce que le pivot de direction (6), fixé rigidement à la chape (20) située du côté de la roue mais pivotant par rapport au carter d'essieu (2), comporte un alésage à diamètre échelonné (35) qui est pourvu d'un filetage (36) dans son plus grand diamètre et dans lequel une vis creuse (37) entoure une tige de réglage (39) fendue aux deux bouts et engagée positivement sur l'axe du potentiomètre (24) au moyen d'un ressort à expansion (38), le jeu radial autour de cette tige étant obturé par un joint annulaire (40) maintenu par la vis creuse, du côté de l'axe de l'essieu par rapport à celle-ci.

7. Commande selon la revendication 1, caractérisée en ce que l'embrayage (11) est constitué par un embrayage à engagement positif pourvu d'un électro-aimant (12).

8. Commande selon la revendication 1, caractérisée en ce que le capteur (7) est combiné avec un interrupteur manuel (17) sur la ligne de liaison (16).

FIG.1

FIG.2

FIG.3

0 227 660

FIG. 4

11